# EUROPEAN PATENT SPECIFICATION

(11) **EP 3 219 418 B1**
(45) Date of publication and mention of the grant of the patent: **10.05.2023**
(21) Application number: 17161420.9
(22) Date of filing: 16.03.2017
(51) Int. Cl.: B22F 3/105, B22F 3/24, B22F 5/10, B22F 10/28, B22F 10/47, B22F 10/66

(54) **SACRIFICIAL CORE FOR CONGLOMERATED POWDER REMOVAL**
OPFERKERN ZUM ENTFERNEN VON ZUSAMMENGEBACKENEM PULVER
NOYAU SACRIFICIEL POUR L'ÉLIMINATION DE POUDRE AGGLOMÉRÉE

(30) Priority: 18.03.2016 US 201615074644
(43) Date of publication of application: 20.09.2017
(73) Proprietor: Raytheon Technologies Corporation, Farmington, CT 06032 (US)
(72) Inventor: BUTCHER, Evan, Manchester, CT 06042 (US); OCKEN, Thomas J., DesMoines, CT 50310 (US); VERSLUYS, Kiley James, Hartford, CT 06103 (US); TWELVES Jr. Wendell V., Glastonbury, CT 06033 (US)
(74) Representative: Dehns

(56) References cited:
- EP-A1- 3 053 676
- EP-A1- 3 192 599
- EP-A2- 3 069 805
- GB-A- 2 517 490
- US-A1- 2006 118 532
- US-A1- 2015 336 233

## Description

### BACKGROUND

The present invention relates generally to additive manufacturing, and more particularly to additively manufacturing a part with an internal passage.

Additive manufacturing is an established but growing technology that includes layerwise construction of articles from thin layers of feed material. Additive manufacturing can involve applying liquid or particulate material to a workstage, then sintering, curing, melting, etc. to create a layer. The process is repeated up to several thousand times or more to construct the desired finished component or article.

In some metal additive manufacturing processes, such as electron beam melting ("EBM"), conglomerated powder can build up inside internal passages of the additive manufactured parts. This extra conglomerated powder in the part therefore must be removed in order for the internal passages of the additively manufactured part to be finished to desired specifications.

In an additive manufacturing process such as electron beam melting ("EBM"), or electron beam powder bed additive manufacturing, energy input into a metal powder bed during the build process will melt a cross section of a solid part. However, where the part includes one or more internal passages, the electron beam energy will also tend to cause metal powder inside of the internal passages to become stuck together during the build process. As part of the EBM or electron beam powder bed additive manufacturing process, the entire layer of powdered material is semi-sintered (synonymous with partially sintered) to reduce the effects of powdered material scattering when the negatively charged electron beam is applied to the powder bed. Once the part is built, the semi-sintered layers of powdered material remain inside internal passages of the part. In order to finish the part, the extra semi-sintered metal powder inside the internal passages therefore must be removed by some mechanical, abrasive, chemical, or vibratory method to retrieve only the solid part. An example strategy to remove excess conglomerated, or semi-sintered, powder from the part can include accelerating like powder from a grit blast nozzle to liberate (knock loose) the semi-sintered particles from the part. Accelerated powder can be effective but only to a certain depth limit, e.g., aspect ratio, for removing semi-sintered powder from the internal passages, and only within line-of-sight access from a point exterior to the part.

When building an additively manufactured part with an internal passage, conglomerated powder becomes entrapped in the internal passage. There are a few methods known to directly and quickly remove the conglomerated powder from internal passages. One example of a standard practice consists of repeatedly using the accelerated powder blast, combined with mechanically scraping conglomerated power out of the passage.

GB 2517490 A discloses additive manufacturing methods.

US 2006/118532 A1 discloses controlled cooling methods and apparatus for laser sintering part-cakes.

### SUMMARY

From a first aspect, the invention provides a method of making a part including a solid portion with an internal passage as recited in claim 1.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a cross-sectional view of an embodiment of an additively manufactured part with a drill bit shaped core.
FIG. 2A is a side view of an embodiment of the drill bit shaped core, shown in isolation.
FIG. 2B is a side view of another embodiment of the drill bit shaped core, shown in isolation.
FIG. 2C is a side view of yet another embodiment of the drill bit shaped core, shown in isolation.
FIG. 2D is a side view of yet another embodiment of the drill bit shaped core, shown in isolation.
FIG. 2E is a side view of yet another embodiment of the drill bit shaped core, shown in isolation.
FIG. 3 is a sectional view of an embodiment of a multi-segment core of an additively manufactured part.
FIG. 4 is a cross-sectional view of the embodiment of the multi-segment core taken along line 4-4 of FIG. 3.
FIG. 5 is a cross-sectional view of the embodiment of the multi-segment core taken along taken along 5-5 of FIG. 3.
FIG. 6 is a cross-sectional view of an embodiment of an additively manufactured part with a core located off-center relative to an internal passage of the additively manufactured part.
FIG. 7 is a cross-sectional view of another embodiment of a multi-segment core of an additively manufactured part.
FIG. 8 is a perspective view of yet another embodiment of a multi-segment core shown in isolation.
FIG. 9 is a flowchart of a method of additively manufacturing a part with a core.

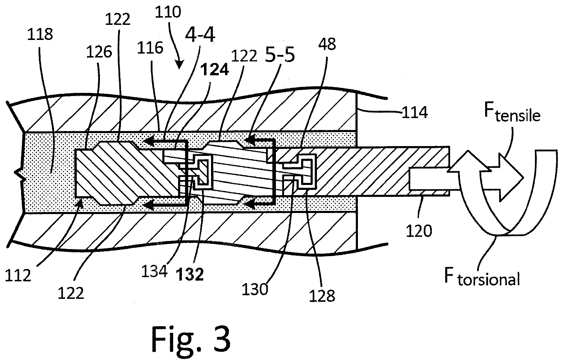

While the above-identified figures set forth embodiments of the present invention, other embodiments are also contemplated, as noted in the discussion. In all cases, this disclosure presents the invention by way of representation and not limitation. The figures may not be drawn to scale, and applications and embodiments of the present invention may include features, steps and/or components not specifically shown in the drawings. The embodiments shown in figures 3-7 with respect to the force are not according to the claimed invention.

### DETAILED DESCRIPTION

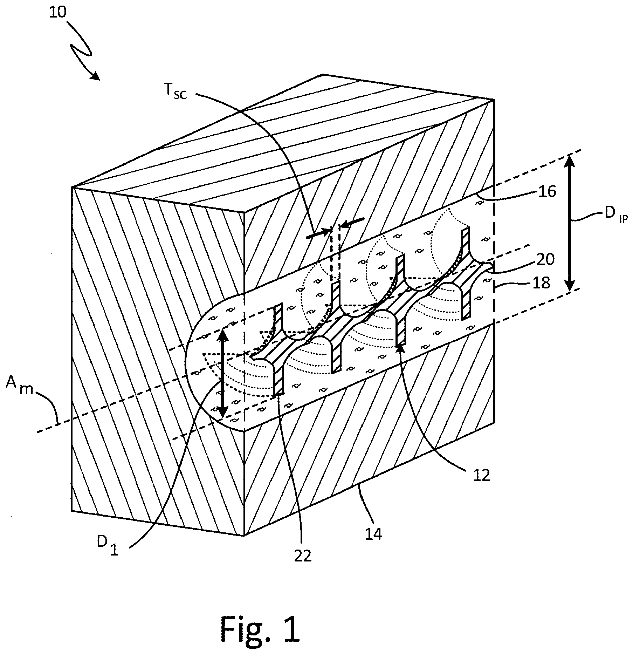

FIG. 1 is a cross-sectional view of an embodiment of additively manufactured part 10 which includes solid core 12, solid portion 14, internal passage 16, and material 18. Material 18 is semi-sintered or un-sintered. Solid core 12 includes attachment feature 20 and shearing portion 22.

Additively manufactured part 10 is built by either EBM or electron beam powder bed additive manufacturing process. As additively manufactured part 10 is built, material 18 is semi-sintered or left un-sintered (i.e., in powder form, without significant inter-particle attachment) within internal passage 16 between solid core 12 and solid portion 14. Throughout the build process, solid core 12 is fused to the same or similar degree as solid portion 14. Once the additive manufacturing process is complete, solid core 12 is formed as a fully-fused solid core and is attached to material 18. Material 18 is positioned within internal passage 16 and is attached to solid portion 14. Additively manufactured part 10 can be built from powdered material such as a nickel superalloy, aluminum alloy, titanium alloy, steel alloy, cobalt alloy, or other suitable metal. While EBM and electron beam powder bed additive manufacturing processes are primarily described, other additive manufacturing techniques can be employed, such as, for example, direct metal laser sintering (DMLS), laser powder bed fusion, electron beam powder bed fusion, and selective laser sintering, as well as other powder bed methods in general.

For example, powder bed methods use a bed of metallic powder that rests on top of a platform to form the layers. A heat source, such as a laser or electron beam, sinters or fuses the metallic powder over the platform. The fused layer becomes the first layer. After the first layer is formed, the platform, along with the first layer, lowers and un-fused powder fills in the void over the first layer. That powder is then sintered or fused to form a second layer. Powder bed methods work well with metals as well as plastics, polymers, composites and ceramics.

After the first layer is produced, additional layers can be produced using the same method that formed the previous layer. The apparatus forms each layer with reference to a computer file, or computer aided design ("CAD") data, defining the part in layers. The CAD data can relate to a particular cross-section of additively manufactured part 10. For example, the CAD data can include geometric data relating to cylindrical core 12A, solid portion 14, internal passage 16, and material 18. With the layers built upon one another and joined to one another cross-section by cross-section, additively manufactured part 10 can be produced to include particular geometries and internal features. A single-piece cylindrical core 12A can be produced that requires no further assembly and can be directly built inside of internal passage 16.

The example powder bed additive manufacturing process discussed here is described in US 2017/0157857 A1 assigned to Butcher et al. entitled "Adjusting Process Parameters To Reduce Conglomerated Powder" and filed December 7, 2015.

Solid core 12 is a solid core in the sense that solid core 12 is fused to the same degree as additively manufactured part 10. In the illustrated embodiment, solid core 12 has a long, narrow strip shape which can extend along internal passage 16. In further embodiments (not shown), solid core 12 can also include a hollow center, as well as simple and/or complex geometries throughout an interior of solid core 12 such as truss structures or lattice structures. Thickness T_{SC} of solid core 12 can be less than 1/10 of diameter D_{IP} of internal passage 16. A width of solid core 12, shown as helical diameter D₁, is greater than thickness T_{SC} of solid core 12 but less than diameter D_{IP} of internal passage 16. In further embodiments, the shape of solid core 12 can vary to include other shapes, sizes, widths, and thicknesses as desired for particular embodiments.

Solid core 12 includes shearing portion 22 which includes a helix with a radial shape of a circle that is twisted about major axis Aₘ in this embodiment. In various other embodiments, shearing portion 22 can be a helix with a radial shape (i.e., a silhouette perimeter shape projected along major axis Aₘ) of an oval, square, or triangle, as well as include varying degrees of twist for example. A pitch of shearing feature 22 can be constant or can vary along Aₘ and can have any suitable value.

Attachment feature 20 is formed on solid core 12 during an additive manufacturing build process. Attachment feature 20 is configured to receive tooling for attaching with solid core 12. Attachment feature 20 includes one or more features such as a hole, bore, tongue, groove, receptacle, link, insert, chuck, socket, clamp, or other type of engagement feature configured to engage with tooling such as a hex drive, square drive, or other suitable attachment form factors. Once tooling is engaged to attachment feature 20, at least one of a compressive, pneumatic vibratory, and electric vibratory force is applied to solid core 12 at attachment feature 20 to detach solid core 12 from material 18. The at least one of a compressive, pneumatic vibratory, and electric vibratory force can be applied, for instance, by standard compressive hammer drill, impact hammer, impact wrench, breaker bar, drill, hand tool, and/or through application of vibration. These applied forces can be monotonic or cyclical. Once solid core 12 is detached from material 18, shearing feature 22 shears material 18 from internal passage 16. Shearing feature 22 actively removes material 18 from internal passage 16 by coming into contact with material 18 and shearing at least a portion of material 18. Shearing feature 22 imparts a localized shearing action on material 18, thereby separating weak inter-particle bonds in material 18, which causes material 18 to be shorn away from internal passage 16.

Solid core 12 is then extracted from additively manufactured part 10. Any remaining material 18 is then removed from internal passage 16 through powder recovery system ("PRS") or abrasive flow techniques. PRS techniques include blasting powder at the part to break apart material 18. Abrasive flow techniques include flowing a liquid containing abrasive particles through internal passage 16 to remove material 18.

Forming additively manufactured part 10 with solid core 12 allows for manufacturability of internal passage 16 of additively manufactured part 10 by allowing the removal of material 18 from deep or high aspect ratio passages. Forming additively manufactured part 10 with solid core 12 also allows for better thermal conductivity to the adjacent passage walls, which in turn enables better manufacturability, reduced surface roughness on passage walls, and improved dimensional results in the as-produced state. A smaller amount of support structures will also be required on the interior of internal passage 16, due to solid core 12 being solid which allows for greater thermal conduction than a powder bed alone, which can be a prevalent issue particularly in laser powder bed fusion processes.

The benefits of using solid core 12 can further include reducing the amount of material 18 to be removed from internal passage 16 due to the void left from solid core 12 after solid core 12 is removed from additively manufactured part 10. The void left from solid core 12 allows for less material 18 left in internal passage 16 after the build process (as compared to if a solid core was not used) resulting in less material 18 required to be removed by PRS and/or abrasive flow techniques. Use of cylindrical core 12A also allows material 18 to be removed from internal passage due to the increased access to material 18 after cylindrical core 12A is removed. If cylindrical core 12A were not used, for example, material 18 could not all be removed from all portions of internal passage 16 and additively manufactured part 10 would not functioned as desired.

Additionally, shearing feature 22 enables solid core 12 to actively remove material 18 from internal passage 16 as solid core 12 is extracted from additively manufactured part 10. Actively removing material 18 during the extraction of solid core 12 reduces an amount of powder removal techniques (e.g., PRS or abrasive flow) that are required to adequately remove the remaining portions of material 18 from internal passage 16 in order to allow additively manufactured part 10 to operate as desired.

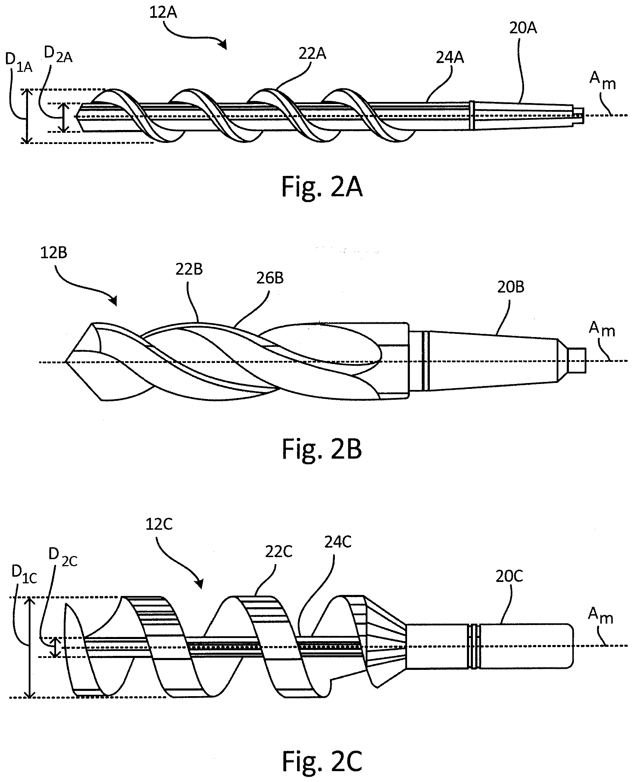

FIG. 2A is a side view of solid core 12A, shown in isolation. Solid core 12A includes attachment feature 20A and shearing feature 22A. Shearing feature 22A includes a helical shape which wraps around center element 24A. Each of attachment feature 20A, shearing feature 22A, and center element 24A are all integrally formed as a single article during the additive manufacturing build process.

After solid core 12A is detached from material 18, solid core 12A is rotated about major axis Aₘ of solid core 12A, wherein major axis Aₘ extends through a center of solid core 12A. As solid core 12A is rotated, shearing feature 22A shears material 18 from internal passage 16. Shearing feature 22A actively removes material 18 from internal passage 16 by coming into contact with material 18 and shearing material 18. Shearing feature 22A imparts a localized shearing action on material 18, thereby separating weak inter-particle bonds in material 18, which causes material 18 to be shorn away from internal passage 16.

In this embodiment, shearing feature 22A includes helical diameter D_{1A} that is approximately twice as large as diameter D_{2A} of center element 24A. In other embodiments, a value of helical diameter D_{1A} can fall between the range of D_{2A} < D_{1A} ≤ a diameter of internal passage 16.

In further embodiments, the shape of shearing feature 22A can vary to include other shapes, sizes, widths, and thicknesses as well as varying degrees of twist as desired for particular embodiments. In various embodiments, shearing portion 22A can be a helix with a radial shape of a circle (shown in FIG. 2A), oval, square, or triangle, as well as other non-symmetrical shapes for example.

FIG. 2B is a side view of solid core 12B, shown in isolation. Solid core 12B includes attachment feature 20B and shearing feature 22B. Shearing feature 22B includes ridges 26B which wrap around solid core 12B. Each of attachment feature 20B, shearing feature 22B, and ridges 26B are all integrally formed as a single article during the additive manufacturing build process.

In this embodiment, shearing feature 22B includes two ridges 26B. In other embodiments, quantities of ridges 26B can vary to be more or less than two. In further embodiments, the shape of shearing feature 22B can vary to include other shapes, sizes, widths, and thicknesses as well as varying degrees of twist as desired for particular embodiments. In various embodiments, shearing portion 22B can include a helix with a radial shape of a circle, oval, square, or triangle, as well as other non-symmetrical shapes for example.

FIG. 2C is a side view of solid core 12C, shown in isolation. Solid core 12C includes attachment feature 20C and shearing feature 22C. Shearing feature 22C has a helical shape that wraps around center element 24C. Each of attachment feature 20C, shearing feature 22C, and center element 24C are all integrally formed as a single article during the additive manufacturing build process.

In this embodiment, shearing feature 22C includes helical diameter D_{1C} that is approximately five times as large as diameter D_{2C} of center element 24C. In other embodiments, a value of helical diameter D_{1C} can fall between the range of D_{2C} < D_{1C} ≤ a diameter of internal passage 16.

In further embodiments, the shape of shearing feature 22C can vary to include other shapes, sizes, widths, and thicknesses as well as varying degrees of twist as desired for particular embodiments. In various embodiments, shearing portion 22C can be a helix with a radial shape of a circle (shown in FIG. 2C), oval, square, or triangle, as well as other non-symmetrical shapes for example.

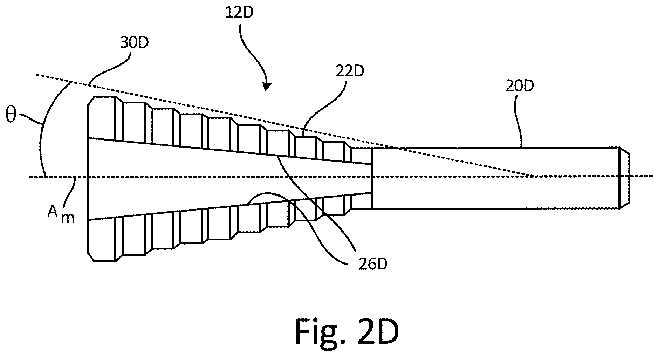

FIG. 2D is a side view of solid core 12D, shown in isolation. Solid core 12D includes attachment feature 20D and shearing feature 22D. Shearing feature 22D includes ridge 26D. Shearing feature 22D includes a tapered shape that widens away from attachment feature 20D. Each of attachment feature 20D and shearing feature 22D are all integrally formed as a single article during the additive manufacturing build process.

Once solid core 12D is detached from material 18, shearing feature 22D shears material 18 from internal passage 16. Shearing feature 22D actively removes material 18 from internal passage 16 by coming into contact with material 18 and shearing at least a portion of material 18. Shearing feature 22D imparts a localized shearing action on material 18, thereby separating weak inter-particle bonds in material 18, which causes material 18 to be shorn away from internal passage 16. Specifically, as solid core 12D is rotated, ridge 26D cuts into material 18 and shears material 18. Upon one complete revolution of solid core 12D, solid core 12D can be moved in an axial direction and positioned to cut another full revolution of material 18. These steps can be repeated to produce a step-wise cutting process until solid core 12D is completely removed from internal passage 16.

The functionality of shearing feature 22D is similar to that of broaching. Broaching, which includes a toothed tool called a broach, includes removing material from a workpiece with the broach. Rotary broaching, similar to the described use of solid core 12D above, includes rotating and pressing the rotary broach into the workpiece to cut an axis symmetric shape. With rotary broaching, a cut is completed after a single rotation of the rotary broach which can be more efficient than the drill bit examples provided in FIGS. 2A-2C. In other embodiments, a shearing feature on solid core can include any other type of cutting, shearing, or manufacturing tool known in the art, to provide a desired shear and/or frictional response between the solid core and material positioned between the multi-segment core and a solid portion of the part.

Angle θ represents an angle of taper of shearing feature 22D relative to major axis Aₘ of solid core 12D. Angle θ, extending between plane 30D and major axis Aₘ, can range from 0° to less than 90°. In further embodiments, the taper angle θ can vary along a length of solid core 12D, or solid core 12D can be curvably tapered, as desired for particular embodiments.

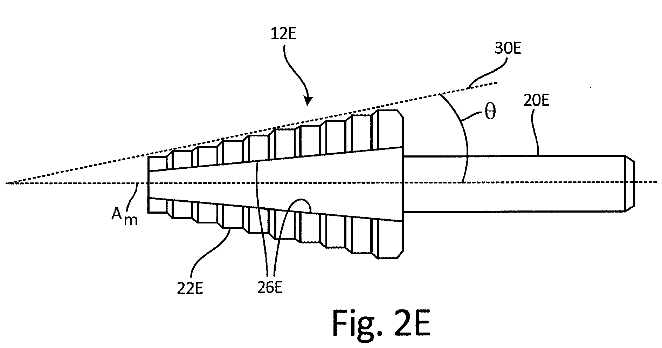

FIG. 2E is a side view of solid core 12E, shown in isolation. Solid core 12E includes attachment feature 20E and shearing feature 22E. Shearing feature 22E includes ridge 26E. Shearing feature 22E includes a tapered shape that narrows away from attachment feature 20E. Each of attachment feature 20E and shearing feature 22E are all integrally formed as a single article during the additive manufacturing build process.

Angle θ represents an angle of taper of shearing feature 22E relative to major axis Aₘ of solid core 12E. Angle θ, extending between plane 30E and major axis Aₘ, can range from 0° to less than 90°. In further embodiments, the taper angle θ can vary along a length of solid core 12E, or solid core 12E can be curvably tapered, as desired for particular embodiments.

FIG. 3 is a sectional view of an embodiment of additively manufactured part 110 with multi-segment core 112. Additively manufactured part 110 includes multi-segment core 112, solid portion 114, internal passage 116, and material 118. Multi-segment core 112 includes attachment feature 120, shearing features 122, first core segment 124, and second core segment 126. The location of the section from which FIG. 3 is viewed is located slightly off-center from a center of multi-segment core 112.

Attachment feature 120 includes first female interlocking feature 128 which receives and connects with first male interlocking feature 130 of first core segment 124. First core segment 124 includes second female interlocking feature 132 which receives and connects with second male interlocking feature 134. As torsional force Fₜₒᵣₛᵢₒₙₐₗ is applied to attachment feature 120, attachment feature 120 breaks from material 118 allowing attachment feature 120 to rotate. As attachment feature 120 is rotated, first female interlocking feature 128 of attachment feature 120 engages with first male interlocking feature 130 of first core segment 124. As force Fₜₒᵣₛᵢₒₙₐₗ is further applied to attachment feature 120, first core segment 124 also breaks from material 118 due to torsional force Fₜₒᵣₛᵢₒₙₐₗ being transferred to first core segment 124 from attachment feature 120. As first core segment 124 is rotated with attachment feature 120, shearing feature 122 on first core segment 124 engages with material 118 and shears material 118 from internal passage 116. Shearing feature 122 on first core segment 124 actively removes material 118 from the portion of internal passage 116 occupied by first core segment 124 by shearing feature 122 coming into contact with material 118 and shearing material 118. Shearing feature 122 imparts a localized shearing or abrading action on material 118, thereby separating weak inter-particle bonds in material 118, which causes material 118 to be shorn or scraped away from internal passage 116.

As first core segment 124 is rotated with attachment feature 120, second female interlocking feature 132 of first core segment 124 engages with second male interlocking feature 134 of second core segment 126. As force Fₜₒᵣₛᵢₒₙₐₗ is further applied to attachment feature 120, second core segment 126 breaks from material 118 due to torsional force Fₜₒᵣₛᵢₒₙₐₗ being transferred to second core segment 126 through first core segment 124 from attachment feature 120. As second core segment 126 is rotated with first core segment 124, shearing feature 122 on second core segment 126 engages with material 118 and shears material 118 from internal passage 116.

Multi-segment core 112 provides the benefit of a staged shear and frictional response between multi-segment core 112 and material 118. As torsional force Fₜₒᵣₛᵢₒₙₐₗ is applied to attachment feature 120, there is typically only one core segment at a time that is shearing material 118. For example, as torsional force Fₜₒᵣₛᵢₒₙₐₗ - not in accordance with the claimed invention-is applied to attachment feature 120, attachment feature 120 first breaks from material 118 before engaging with first core segment 124. As attachment feature 120 rotates, attachment feature 120 locks with first core segment 124 causing first core segment 124 to break from material 118. Because first core segment 124 is attached to material 118 only along a length of first core segment 124, an amount of torsional force Fₜₒᵣₛᵢₒₙₐₗ required to break first core segment 124 from material 118 is proportional to the length of first core segment 124. The amount of torsional force Fₜₒᵣₛᵢₒₙₐₗ required to break first core segment 124 from material 118 is less than an amount of torsional force Fₜₒᵣₛᵢₒₙₐₗ that would be required to break a core segment with a length longer than first core segment 124 because a longer core segment would have more surface area attached to material 118 thus requiring more torsional force to be applied to break the connection between material 118 and the longer core segment. After an amount of torsional force Fₜₒᵣₛᵢₒₙₐₗ sufficient to break free all of attachment feature 120, first core segment 124, and second core segment 126 from material 118, tensile force Fₜₑₙₛᵢₗₑ - not according to the claimed invention-is applied to attachment feature 120 to remove multi-segment core 112 from additively manufactured part 110. It should be appreciated, however, that applying a torsional force, *per se,* falls outside the scope of the invention.

In the example shown, multi-segment core 112 includes attachment feature 120 and two core segments 124 and 126. However, the illustrated embodiment is shown merely by way of example and not limitation. In other embodiments, a multi-segment core can include more or less, longer or shorter, or wider or narrower core segments and/or shearing features, to provide a desired shear and/or frictional response between the multi-segment core and material positioned between the multi-segment core and a solid portion of the part. Additionally, multi-segment core 112 can include any or all of the shearing features disclosed in each of the other embodiments included in this disclosure.

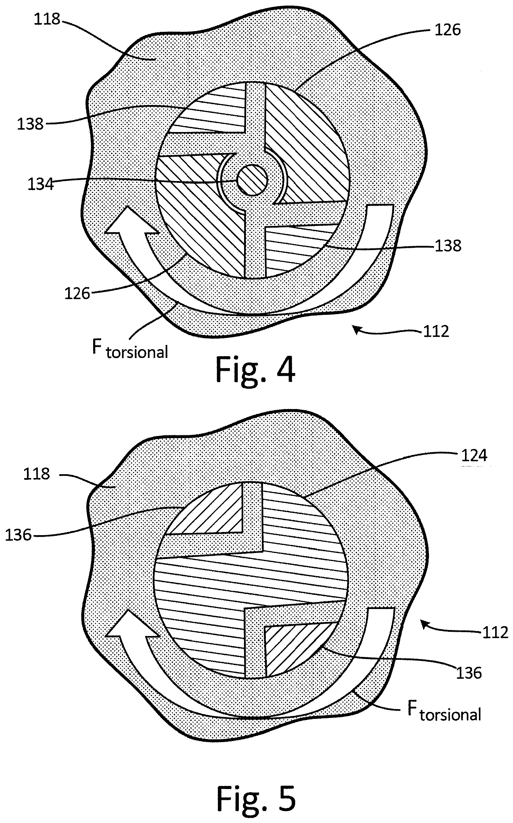

FIG. 4 is a cross-sectional view of multi-segment core 112 taken along line 4-4 of FIG. 3 and FIG. 5 is a cross-sectional view of multi-segment core 112 taken along 5-5 of FIG. 3. First core segment 124 and second core segment 126 interlock with each other such that as first core segment 124 is rotated, the spacing between first core segment 124 and second core segment 126 is reduced, first core segment comes into angular contact with second core segment 126, and torsional force Fₜₒᵣₛᵢₒₙₐₗ is transferred from first core segment 124 to second core segment 126. The interaction of first female interlocking feature 128 and first male interlocking feature 130 provides a twist-to-lock feature between first core segment 124 and second core segment 126 whereby application of relative torsional engagement between first core segment 124 and second core segment 126 causes first core segment 124 and second core segment 126 to lock with each other such that first core segment 124 and second core segment 126 can be rotated and pulled together.

Specifically, fingers 136 of attachment feature 120 enable angular contact with and transmission of torsional force Fₜₒᵣₛᵢₒₙₐₗ to first core segment 124. Fingers 138 of first core segment 124 enable angular contact with and transmission of torsional force Fₜₒᵣₛᵢₒₙₐₗ to second core segment 126. Fingers 136 and 138 include a quarter-circle cross sectional shape. First core segment 124 and second core segment 126 can have cut-outs which are shaped to receive the quarter-circle shapes of fingers 136 and 138 respectively. In other embodiments, fingers 136 and 138 can include more or less, longer or shorter, or wider or narrower shapes and/or cross-sections, to provide a desired torsional response between attachment feature 120, first core segment 124, and second core segment 126.

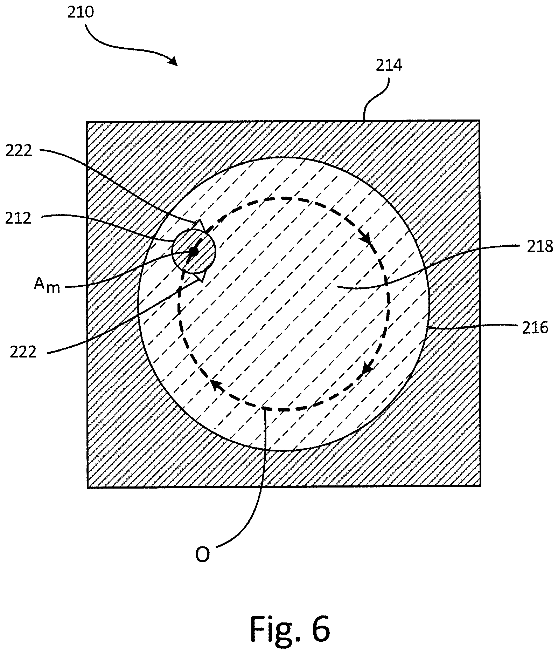

FIG. 6 is a cross-sectional view of an embodiment of additively manufactured part 210 which includes solid core 212, solid portion 214, internal passage 216, and material 218.

Solid core 212 is positioned within internal passage 216 and is located off-center relative to internal passage 216. After solid core 212 is detached from material 218, solid core 212 is rotated about major axis Aₘ of solid core 212, wherein major axis Aₘ extends through a center of solid core 212. As solid core 212 is rotated, shearing feature 222 shears material 218 from internal passage 216. Shearing feature 222 actively removes material 218 from internal passage 216 by coming into contact with material 18 and shearing material 218.

As solid core 212 is rotated about an axis Aₘ in the illustrated embodiment, solid core 212 is also moved along orbit O within internal passage 216, thereby moving solid core 212 about an epicyclic or planetary path. As solid core 212 moves along orbit O, solid core 212 shears material 218 along the path of orbit O. Solid core 212 can also be extracted from internal passage 216 (e.g., in FIG. 6, drawn into or out of the page) while being moved along orbit O. In this specific embodiment, solid core 212 incorporates a cutting behavior similar to that of a milling cutter, in that the cutting or shearing action of solid core 212 occurs as solid core moves in a radial direction (relative to solid core 212), as opposed to an axially oriented cutting direction of various other types of cutters such as drill bits.

In further embodiments, the shape of orbit O can vary to include other shapes and sizes as desired for particular embodiments. In various embodiments, orbit O can include a shape of a circle, oval, square, or triangle, for example. Additionally, the shape and size of solid core can also vary. For example, solid core 212 can have a small diameter relative to a diameter of internal passage (e.g., diameter of solid core 212 can be less than 1/10 the size of the diameter of internal passage 216). Having the diameter of solid core 212 being relatively small still allows for the removal of the same amount of material as an embodiment with a solid core with a diameter the same or similar size as orbit O, due to the cutting or shearing action of solid core 212 along orbit O, however the amount of material required to create solid core 212 is much less than would be required for the solid core with the diameter the same or similar size as orbit O.

Forming solid core 212 along with additively manufactured part 210 also provides the benefit of reducing the number of machining steps typical machining methods would require to remove material 218. For example, in order to create a hole for a milling cutter to be introduced into material 218, an axially cutting drill bit would need to first cut a hole into material 218. The axially cutting drill bit would then need to be removed, before a milling cutter bit could be introduced into the hole created by the axially cutting drill bit. Forming solid core 212 along with additively manufactured part 210 reduces the number of steps because after additively manufactured part 210 is formed, solid core 212 is already positioned within material 218 which obviates the step of axially cutting the hole into material 218.

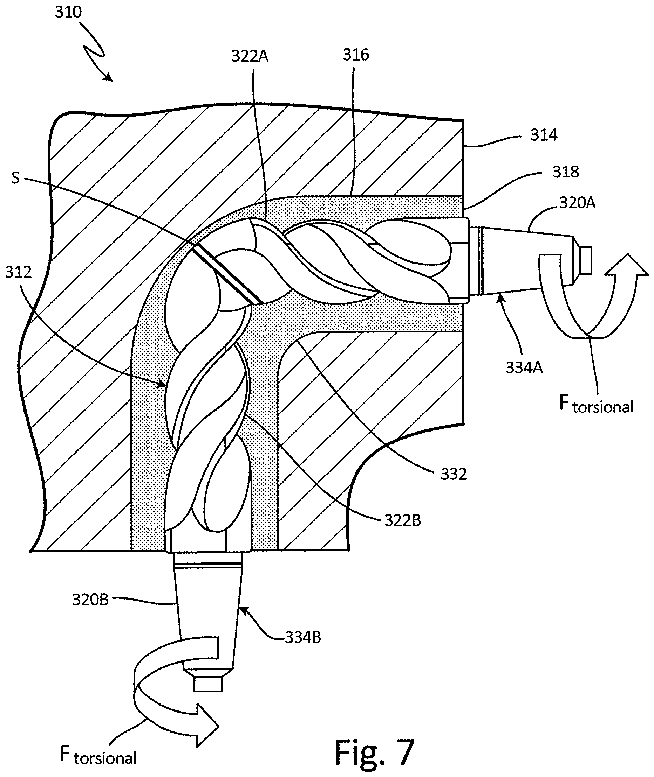

FIG. 7 is a cross-sectional view of additively manufactured part 310 which includes multi-segment core 312, solid portion 314, internal passage 316 with bend 332, and material 318. Multi-segment core 312 includes first core segment 334A and second core segment 334B. First core segment 334A includes attachment feature 320A and shearing feature 322A. Second core segment 334B includes attachment feature 320B and shearing feature 322B.

Due to the non-linear geometry of internal passage 316 with bend 332, a core configuration with more than a single linear core segment is required. If a single solid core were formed in internal passage 316 with bend 332, upon attempting removal, the single core would not pass past bend 332.

Use of first core segment 334A and second core segment 334B in additively manufactured part 310 allows for formation and removal of solid cores within an internal passage which includes a non-linear geometry. In this example, internal passage 316 includes bend 332 and essentially two major portions of passageway. As additively manufactured part 310 is formed, first core segment 334A and second core segment 334B are formed to create separation S between first core segment 334A and second core segment 334B. After additively manufactured part 310 is formed, first torsional force Fₜₒᵣₛᵢₒₙₐₗ is applied to first core segment 334A and second torsional force Fₜₒᵣₛᵢₒₙₐₗ is applied to second core segment 334B - not according to the claimed invention-. In other examples, in accordance with the invention, compressive, or pneumatic or electrical vibratory forces are applied to either or both of first core segment 334A and second core segment 334B. These applied forces can be monotonic or cyclical.

Internal passage 316 with bend 332 is an example of an internal passage with more than just a simple linear passageway extending through additively manufactured part 310. However, the illustrated embodiment is shown merely by way of example and not limitation. In other examples, other internal passageways can include longer or shorter, or wider or narrower or bends with different shapes than internal passage 316 with bend 332.

In other embodiments, a multi-segment core can include longer or shorter, or wider or narrower core segments and/or shearing features, to provide a desired shear and/or frictional response between the multi-segment core and the material positioned between the multi-segment core and a solid portion of the part. Additionally, multi-segment core 312 can include any or all of the shearing features disclosed in each of the other embodiments included in this disclosure.

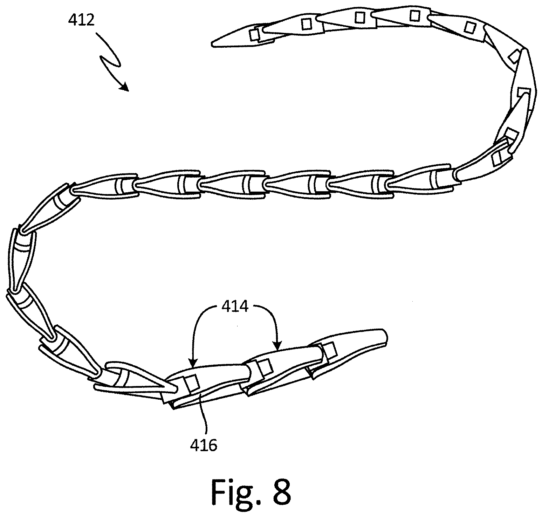

FIG. 8 is a perspective view multi-segment core 412 shown in isolation, which includes a plurality of links 414. Each link 414 includes shearing feature 416. Multi-segment core 412 can be used in any of the preceding embodiments of internal passageways including both linear internal passageways and internal passageways including complex geometries.

Each link 414 includes features allowing links 414 to pivot relative to each other. As a compressive, pneumatic or electric vibratory force is applied to multi-segment core 412 and as multi-segment core 412 is maneuvered through an internal passage of an additively manufactured part during removal, links 414 to pivot relative to each other to conform to a shape of the internal passage. The ability of links 414 to conform to the shape of the internal passageway allows for the use of multi-segment core 412 in internal passageways including complex geometries and numerous bends, twists, and turns, while still being able to extract an entire length of multi-segment core 412 by applying at least one of a compressive, pneumatic vibratory, and electric vibratory force to multi-segment core 412.

Shearing feature 416 includes a sharp edge for cutting material in both an axial and radial direction. As shearing feature 416 is drawn across a material in an internal passage along either an axial or radial direction, shearing feature 416 cuts into the material inside of the internal passage. Shearing feature 416 shears away the material in the internal passage by imparting a localized shearing action on the material, thereby separating weak inter-particle bonds in the material, which causes the material to be shorn away from the internal passage.

As discussed with previous embodiments, shearing features 416 enable multi-segment core 412 to actively remove material from an internal passage as multi-segment core 412 is extracted from an additively manufactured part.

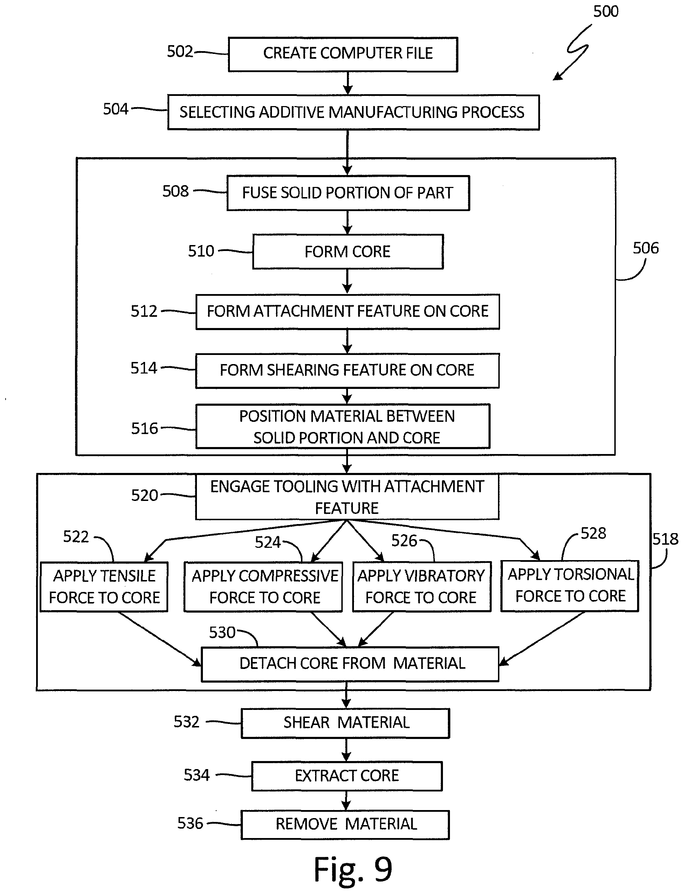

FIG. 9 is a flowchart of method 500 of additively manufacturing a part with a core, which includes a series of steps to additively manufacture a part. In this embodiment, the part is formed to include an internal passage extending through at least a portion of the part. While EBM is described, any other form of additive manufacturing or 3D printing, such as EB powder bed additive manufacturing, direct metal laser sintering (DMLS), laser powder bed fusion, electron beam powder bed fusion, and selective laser sintering, as well as other powder bed methods in general, can be used.

Step 502 includes creating a computer file defining the part in layers, with the part including an internal passage and a solid portion. Step 504 includes selecting an additive manufacturing process to build the part on a layer-by-layer basis, with the additive manufacturing process being either EBM or electron beam powder bed additive manufacturing. The part can be built from powdered material such as a nickel superalloy, aluminum alloy, titanium alloy, steel alloy, cobalt alloy, or other suitable metal.

Additively building the part (collectively, Step 506) includes individual steps 508-516. Step 508 includes fusing the solid portion of the part. Step 510 includes forming a core within at least a portion of the internal passage, which includes forming at least one of a straight, threaded, angled, chain, ribbon, or helical portion that engages with a material positioned between the core and the solid portion. The material positioned between the core and the solid portion is semi-sintered or un-sintered. Sintering the core includes steps 512 and 514. Step 512 includes forming an attachment feature on the core. Step 514 includes forming a shearing feature on the core. Steps 512 and 514 can be performed concurrently. At this stage, method 500 can include either forming one core segment or forming at least two core segments. Method 500 can also include forming an interlocking feature on each core segment. Step 516 includes positioning the material between the solid portion and the core. Step 516 can be performed concurrently with steps 512 and/or 514.

Applying work to the core (collectively, Step 518), includes individual steps 520-530. Step 520 includes engaging tooling with the attachment feature on the core. After Step 520, worked can be applied to the core by one of Step 524 or Step 526 or a combination of at least two of Steps 522-528 including at least Step 524 or Step 526. Step 522, not according to the claimed invention, includes applying tensile force to the core. Step 524 includes applying compressive force to the core. Step 526 includes applying at least one of pneumatically vibrating and electrically vibrating the core relative to the part. Step 528, not according to the claimed invention, includes applying a monotonic or repetitive impact torsional force to the core. Applying work to the core can further include engaging the interlocking features of the at least two core segments with each other to connect the at least two core segments. Step 530 includes detaching the core from the part. Step 532 includes shearing the material between the solid portion and the core with the shearing feature. Step 534 includes extracting the core from the part. Step 536 includes removing the material between the solid portion and the core from the part.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, torsional, tensile, compressive, or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

## Claims

1. A method of making a part (10; 110; 210; 310) comprising a solid portion (14; 114; 214; 314) with an internal passage (16; 116; 216; 316), the method comprising:
(a) building the part (10...310) using an additive manufacturing process by powder-bed fusion that builds the part (10...310) on a layer-by-layer basis, wherein building the part (10...310) comprises:
i. fusing the solid portion (14... 314) of the part (10... 310);
ii. forming a solid core (12; 12A-E; 112; 212; 312; 412) within at least a portion of the internal passage (16... 316), wherein forming the solid core (12...412) comprises:
forming an attachment feature (20; 20A-E; 120; 320A-B), wherein forming the attachment feature (20... 320A-B) comprises forming at least one of a hole, bore, tongue, groove, receptacle, link, insert, chuck, socket, and clamp on the solid core (12...412); and
forming a shearing feature (22; 22A-E; 322A-B);
iii. positioning a material (18; 118; 218; 318) between the solid portion (14... 314) and the solid core (12...412), wherein the material (18...318) is semi-sintered or un-sintered;
(b) applying a force selected from the group consisting of a compressive, pneumatic vibratory, and electric vibratory force to the solid core (12...412) at the attachment feature (20... 320A-B); and
(c) shearing the material (18...318) positioned between the solid portion (14...314) and the solid core (12... 412) with the shearing feature (22... 416).

2. The method of claim 1, further comprising:
creating a computer file defining the part (10... 310) in layers.

3. The method of claim 1 or 2, and further comprising:
engaging tooling with the attachment feature (20...320A-B) of the solid core (12...412).

4. The method of any preceding claim, wherein applying a force selected from the group consisting of a compressive, pneumatic vibratory, and electric vibratory force to the solid core (12... 412) further comprises:
detaching the solid core (12...412) from the material (18...318) positioned between the solid portion (14... 314) and the solid core (12... 412).

5. The method of any preceding claim, wherein shearing the material (18... 318) positioned between the solid portion (14... 314) and the solid core (12... 412) further comprises:
rotating the solid core (12...412) about a major axis (Aₘ) of the solid core (12... 412), wherein the major axis (Aₘ) extends through a center of the solid core (12...412).

6. The method of any preceding claim, and further comprising:
extracting the solid core (12... 412) from the part.

7. The method of any preceding claim, and further comprising:
removing the material (18... 318) positioned between the solid portion (14...314) and the solid core (12...412) from the part (10... 310).

8. The method of claim 7, wherein removing the material (18... 318) positioned between the solid portion (14...314) and the solid core (12...412) from the part (10...310) comprises:
applying a removal technique, wherein the removal technique is selected from the group consisting of powder blasting and abrasive flow.

9. The method of any preceding claim, and further comprising:
moving an axis (Aₘ) of the solid core (212) in an orbit (O) within the internal passage (216).

10. The method of any preceding claim, wherein the additive manufacturing process that builds the part (10...310) on a layer-by-layer basis is selected from the group consisting of electron beam melting and electron beam powder bed additive manufacturing.

11. The method of any preceding claim, wherein forming the solid core (112; 412) further comprises:
forming a plurality of solid core segments (124, 126; 414); and
forming a shearing feature (122; 416) on each of the plurality of solid core segments (124; 126; 414).

12. The method of claim 11, wherein forming the plurality of solid core segments (124, 126; 414), further comprises:
forming an interlocking feature (128, 130, 132, 134) on each of the plurality of solid core segments (124, 126; 414).

13. The method of claim 12, wherein applying a force selected from the group consisting of a compressive, pneumatic vibratory, and electric vibratory force to the solid core (112; 412) further comprises:
engaging the interlocking features (128... 134) of the plurality of solid core segments (124, 126; 144) with each other to connect the plurality of solid core segments (124, 126; 414).

14. The method of any preceding claim, wherein removing the solid core (112; 412) further comprises:
pivoting at least some of the plurality of solid core segments (124, 126; 414) relative to each other as a force selected from the group consisting of a compressive, pneumatic vibratory, and electric vibratory force is applied to the solid core (112; 412) such that the solid core (112; 412) is maneuvered through the internal passage (116) as the solid core (112; 412) is removed from the part (110); and
shearing the material (118) positioned between the solid portion (114) and the solid core (112; 412) with the shearing feature (122; 416) on each of the plurality of solid core segments (124, 126; 414) as the shearing feature on each of the plurality of solid core segments (124, 126; 414) is drawn through and across the material (118) positioned between the solid portion (114) and the solid core (112; 412).

## Patentansprüche

1. Verfahren zum Herstellen eines Teils (10; 110; 210; 310), das einen massiven Abschnitt (14; 114; 214; 314) mit einem Innendurchgang (16; 116; 216; 316) umfasst, wobei das Verfahren Folgendes umfasst:
(a) Bauen des Teils (10...310) unter Verwendung eines additiven Herstellungsprozesses durch Pulverbettschmelzen, das das Teil (10...310) Schicht für Schicht aufbaut, wobei das Bauen des Teils (10...310) Folgendes umfasst:
i. Schmelzen des massiven Abschnitts (14...314) des Teils (10...310);
ii. Bilden eines massiven Kerns (12; 12A-E; 112; 212; 312; 412) innerhalb mindestens eines Abschnitts des Innendurchgangs (16...316), wobei das Bilden des massiven Kerns (12...412) Folgendes umfasst:
Bilden eines Anbringungselements (20; 20A-E; 120; 320A-B), wobei das Bilden des Anbringungselements (20 ... 320A-B) das Bilden mindestens eines Lochs, einer Bohrung, einer Zunge, einer Nut, einer Aufnahme, einer Verbindung, eines Einsatzes, eines Spannfutters, einer Buchse und einer Klemme an dem massiven Kern (12...412) umfasst; und
Bilden eines Scherelements (22; 22A-E; 322A-B);
iii. Positionieren eines Materials (18; 118; 218; 318) zwischen dem massiven Abschnitt (14...314) und dem massiven Kern (12...412), wobei das Material (18...318) halbgesintert oder ungesintert ist;
(b) Anlegen einer Kraft, die aus der Gruppe ausgewählt ist, die aus einer Kompressions-, pneumatischen Vibrations- und elektrischen Vibrationskraft besteht, an den massiven Kern (12...412) an dem Anbringungselement (20...320A-B); und
(c) Scheren des Materials (18...318), das zwischen dem massiven Abschnitt (14...314) und dem massiven Kern (12...412) positioniert ist, mit dem Scherelement (22...416).

2. Verfahren nach Anspruch 1, das ferner Folgendes umfasst:
Erstellen einer Computerdatei, die das Teil (10...310) in Schichten definiert.

3. Verfahren nach Anspruch 1 oder 2, das ferner Folgendes umfasst:
Einrücken von Werkzeug in das Anbringungselement (20...320A-B) des massiven Kerns (12...412).

4. Verfahren nach einem der vorhergehenden Ansprüche, wobei das Anlegen einer Kraft, die aus der Gruppe ausgewählt ist, die aus einer Kompressions-, pneumatischen Vibrations- und elektrischen Vibrationskraft besteht, an den massiven Kern (12...412) ferner Folgendes umfasst:
Ablösen des massiven Kerns (12...412) von dem Material (18...318), das zwischen dem massiven Abschnitt (14...314) und dem massiven Kern (12...412) positioniert ist.

5. Verfahren nach einem der vorhergehenden Ansprüche, wobei das Scheren des Materials (18...318), das zwischen dem massiven Abschnitt (14...314) und dem massiven Kern (12...412) positioniert ist, ferner Folgendes umfasst:
Drehen des massiven Kerns (12...412) um eine Hauptachse (Aₘ) des massiven Kerns (12...412), wobei sich die Hauptachse (Aₘ) durch eine Mitte des massiven Kerns (12...412) erstreckt.

6. Verfahren nach einem der vorhergehenden Ansprüche, und ferner Folgendes umfassend:
Herausziehen des massiven Kerns (12...412) aus dem Teil.

7. Verfahren nach einem der vorhergehenden Ansprüche, und ferner Folgendes umfassend:
Entfernen des Materials (18...318), das zwischen dem massiven Abschnitt (14...314) und dem massiven Kern (12...412) positioniert ist, von dem Teil (10...310).

8. Verfahren nach Anspruch 7, wobei das Entfernen des Materials (18...318), das zwischen dem massiven Abschnitt (14...314) und dem massiven Kern (12...412) positioniert ist, von dem Teil (10...310) Folgendes umfasst:
Anwenden einer Entfernungstechnik, wobei die Entfernungstechnik aus der Gruppe ausgewählt ist, die aus Pulverstrahlen und Strahlmittelstrom besteht.

9. Verfahren nach einem der vorhergehenden Ansprüche, und ferner Folgendes umfassend:
Bewegen einer Achse (Aₘ) des massiven Kerns (212) in einer Umlaufbahn (O) innerhalb des Innendurchgangs (216).

10. Verfahren nach einem der vorhergehenden Ansprüche, wobei der additive Herstellungsprozess, der das Teil (10...310) Schicht für Schicht aufbaut, aus der Gruppe ausgewählt ist, die aus Elektronenstrahlschmelzen und additiver Elektronenstrahl-Pulverbettherstellung besteht.

11. Verfahren nach einem der vorhergehenden Ansprüche, wobei das Bilden des massiven Kerns (112; 412) ferner Folgendes umfasst:
Bilden einer Vielzahl von massiven Kernsegmente (124, 126; 414); und
Bilden eines Scherelements (122; 416) an jedem der Vielzahl von massiven Kernsegmente (124; 126; 414).

12. Verfahren nach Anspruch 11, wobei das Bilden der Vielzahl von massiven Kernsegmente (124, 126; 414) ferner Folgendes umfasst:
Bilden eines Verriegelungselements (128, 130, 132, 134) an jedem der Vielzahl von massiven Kernsegmente (124, 126; 414).

13. Verfahren nach Anspruch 12, wobei das Anlegen einer Kraft, die aus der Gruppe ausgewählt ist, die aus einer Kompressions-, pneumatischen Vibrations- und elektrischen Vibrationskraft besteht, an den massiven Kern (112...412) ferner Folgendes umfasst:
Einrücken der Verriegelungselemente (128...134) der Vielzahl von massiven Kernsegmente (124, 126; 144) ineinander, um die Vielzahl von massiven Kernsegmente (124, 126; 414) zu verbinden.

14. Verfahren nach einem der vorhergehenden Ansprüche, wobei Entfernen des massiven Kerns (112; 412) ferner Folgendes umfasst:
Schwenken mindestens einiger der Vielzahl von massiven Kernsegmente (124, 126; 414) relativ zueinander, während eine Kraft, die aus der Gruppe ausgewählt ist, die aus einer Kompressions-, pneumatischen Vibrations- und elektrischen Vibrationskraft besteht, an den massiven Kern (112; 412) derart angelegt wird, dass der massive Kern (112; 412) durch den Innendurchgang (116) manövriert wird, während der massive Kern (112; 412) von dem Teil (110) entfernt wird; und
Scheren des Materials (118), das zwischen dem massiven Abschnitt (114) und dem massiven Kern (112; 412) positioniert ist, mit dem Scherelement (122; 416) an jedem der Vielzahl von massiven Kernsegmente (124, 126; 414), während das Scherelement an jedem der Vielzahl von massiven Kernsegmente (124, 126; 414) durch und über das Material (118) gezogen wird, das zwischen dem massiven Abschnitt (114) und dem massiven Kern (112; 412) positioniert ist.

## Revendications

1. Procédé de fabrication d'une pièce (10 ; 110 ; 210 ; 310) comprenant une partie solide (14 ; 114 ; 214 ; 314) avec un passage interne (16 ; 116 ; 216 ; 316), le procédé comprenant :
(a) la construction de la pièce (10...310) à l'aide d'un processus de fabrication additive par fusion sur lit de poudre qui construit la pièce (10...310) sur une base couche par couche, dans lequel construire la pièce (10...310) comprend :
i. la fusion de la partie solide (14...314) de la pièce (10...310) ;
ii. la formation d'un noyau solide (12 ; 12A-E ; 112 ; 212 ; 312 ; 412) dans au moins une partie du passage interne (16...316), dans lequel la formation du noyau solide (12...412) comprend :
la formation d'un élément de fixation (20 ; 20A-E ; 120 ; 320A-B), dans lequel la formation de l'élément de fixation (20...320A-B) comprend la formation d'au moins l'un d'un trou, d'un alésage, d'une languette, d'une rainure, d'un réceptacle, d'un maillon, d'un insert, d'un mandrin, d'une douille et d'une pince sur le noyau solide (12...412) ; et
la formation d'une caractéristique de cisaillement (22 ; 22A-E ; 322A-B) ;
iii. le positionnement d'un matériau (18 ; 118 ; 218 ; 318) entre la partie solide (14...314) et le noyau solide (12...412), le matériau (18...318) étant semi-fritté ou non fritté ;
(b) l'application d'une force choisie dans le groupe constitué d'une force de compression, de vibration pneumatique et de vibration électrique au noyau solide (12...412) au niveau de l'élément de fixation (20...320A-B) ; et
(c) le cisaillement du matériau (18...318) positionné entre la partie solide (14...314) et le noyau solide (12...412) avec l'élément de cisaillement (22...416).

2. Procédé selon la revendication 1, comprenant en outre :
la création d'un fichier informatique définissant la pièce (10...310) en couches.

3. Procédé selon la revendication 1 ou 2, comprenant en outre :
la mise en prise de l'outillage avec l'élément de fixation (20...320A-B) du noyau solide (12...412).

4. Procédé selon une quelconque revendication précédente, dans lequel l'application d'une force choisie dans le groupe constitué d'une force de compression, de vibration pneumatique et de vibration électrique au noyau solide (12...412) comprend en outre :
le détachement du noyau solide (12...412) du matériau (18...318) positionné entre la partie solide (14...314) et le noyau solide (12...412).

5. Procédé selon une quelconque revendication précédente, dans lequel le cisaillement du matériau (18...318) positionné entre la partie solide (14...314) et le noyau solide (12...412) comprend en outre :
la rotation du noyau solide (12...412) autour d'un axe principal (Aₘ) du noyau solide (12...412), dans lequel l'axe principal (Aₘ) s'étend à travers un centre du noyau solide (12...412).

6. Procédé selon une quelconque revendication précédente, comprenant en outre :
l'extraction du noyau solide (12...412) de la pièce.

7. Procédé selon une quelconque revendication précédente, comprenant en outre :
le retrait du matériau (18...318) positionné entre la partie solide (14...314) et le noyau solide (12...412) de la pièce (10...310).

8. Procédé selon la revendication 7, dans lequel le retrait du matériau (18...318) positionné entre la partie solide (14...314) et le noyau solide (12...412) de la pièce (10... 310) comprend :
l'application d'une technique d'élimination, dans lequel la technique d'élimination est choisie dans le groupe constitué d'un sablage à la poudre et d'un jet d'abrasif.

9. Procédé selon une quelconque revendication précédente, comprenant en outre :
le déplacement d'un axe (Aₘ) du noyau solide (212) sur une orbite (O) à l'intérieur du passage interne (216).

10. Procédé selon une quelconque revendication précédente, dans lequel le procédé de fabrication additive qui construit la pièce (10...310) sur une base couche par couche est sélectionné dans le groupe constitué de la fusion par faisceau d'électrons et de la fabrication additive sur lit de poudre par faisceau d'électrons.

11. Procédé selon une quelconque revendication précédente, dans lequel la formation du noyau solide (112 ; 412) comprend en outre :
la formation d'une pluralité de segments de noyau solide (124, 126 ; 414) ; et
la formation d'un élément de cisaillement (122 ; 416) sur chacun de la pluralité de segments de noyau solide (124 ; 126 ; 414).

12. Procédé selon la revendication 11, dans lequel la formation de la pluralité de segments de noyau solide (124, 126 ; 414) comprend en outre :
la formation d'un élément de verrouillage (128, 130, 132, 134) sur chacun de la pluralité de segments de noyau solide (124, 126 ; 414).

13. Procédé selon la revendication 12, dans lequel l'application d'une force choisie dans le groupe constitué d'une force de compression, de vibration pneumatique et de vibration électrique au noyau solide (112 ; 412) comprend en outre :
la mise en prise des caractéristiques de verrouillage (128... 134) de la pluralité de segments de noyau solide (124, 126 ; 144) les uns avec les autres pour connecter la pluralité de segments de noyau solide (124, 126 ; 414).

14. Procédé selon une quelconque revendication précédente, dans lequel le retrait du noyau solide (112 ; 412) comprend en outre :
le pivotement d'au moins certains de la pluralité de segments de noyau solide (124, 126 ; 414) les uns par rapport aux autres lorsqu'une force sélectionnée dans le groupe constitué d'une force de compression, de vibration pneumatique et de vibration électrique est appliquée au noyau solide (112 ; 412) de sorte que le noyau solide (112 ; 412) est manœuvré à travers le passage interne (116) lorsque le noyau solide (112 ; 412) est retiré de la pièce (110) ; et
le cisaillement du matériau (118) positionné entre la partie solide (114) et le noyau solide (112 ; 412) avec l'élément de cisaillement (122 ; 416) sur chacun de la pluralité de segments de noyau solide (124, 126 ; 414) en tant que caractéristique de cisaillement sur chacun de la pluralité de segments de noyau solide (124, 126 ; 414) est tirée à travers le matériau (118) positionné entre la partie solide (114) et le noyau solide (112 ; 412).
